# EUROPÄISCHE PATENTSCHRIFT

(11) **EP 1 117 974 B1**
(45) Veröffentlichungstag und Bekanntmachung des Hinweises auf die Patenterteilung: **31.08.2005**
(21) Anmeldenummer: 98954306.1
(22) Anmeldetag: 30.09.1998
(51) Int. Cl.: G01B 11/02, B23K 26/08

(54) **Laserbearbeitungsvorrichtung mit schichtweisem Abtrag mit Gesenktiefenspeicherung zur späteren Ansteuerung**
Laser processing device with layer by layer removal with die depth storage for future control
Dispositif d'usinage par laser par enlèvement de couches successives avec mémorisation de profondeur de matrice pour un futur contrôle

(43) Veröffentlichungstag der Anmeldung: 25.07.2001
(73) Patentinhaber: Lasertec GmbH, 87459 Pfronten (DE)
(72) Erfinder: KUHL, Michael, D-87629 Füssen (DE); WRBA, Peter, D-87647 Unterthingau (DE); HILDEBRAND, Peter, D-87484 Nesselwang (DE); REISACHER, Martin, D-87439 Kempten (DE)
(74) Vertreter: Beetz & Partner
(86) Internationale Anmeldenummer: PCT/EP1998/006225
(87) Internationale Veröffentlichungsnummer: WO 2000/019167

(56) Entgegenhaltungen:
- DE-A- 3 117 556
- DE-A- 4 200 632
- DE-C- 4 011 780

## Beschreibung

Die Erfindung betrifft im weitesten Sinne die Tiefenmessung und Tiefensteuerung bzw. -regelung für ein durch eine Laserbearbeitungsvorrichtung herzustellendes Gesenk.

Ein Tiefenmeßsystem ist aus der DE OS 42 06 499 bekannt. Dort wird inkohärentes Prozeßleuchten ausgewertet, beispielsweise über ein Triangulationsverfahren oder durch Auswertung des Abstands zwischen verschiedenen Abbildern des Leuchtflecks.

Zur Abbildung des Leuchtflecks auf einen Sensor oder eine Sensorzeile wird eine Linse benötigt. Da der Leuchtfleck an beliebigen Stellen im Arbeitsbereich Bx, By liegen kann, muß dafür Sorge getragen werden, daß bei allen Lagen des Leuchtflecks im Bearbeitungsbereich der Laserbearbeitungsvorrichtung die Fokussierung hinreichend genau ist.

Herkömmliche Linsen haben eine kugelförmige Brennfläche. Da die von der Laserbearbeitungsvorrichtung gerade bearbeitet Fläche jedoch in der Regel nicht kugelflächig ist, wird somit immer eine leichte Defokussierung auftreten. Sogenannte Fθ-Linsen sind dahingehend korrigiert, daß sie eine ebene Brennfläche haben. Auch diese Brennfläche ist jedoch nicht vollständig eben, so daß Defokussierungen auftreten können. In Abhängigkeit von der gewünschten Meßgenauigkeit können solche Unschärfen zu nicht hinnehmbaren Genauigkeitseinbu-ßen führen. Die genannten Fθ-Linsen erlauben Meßgenauigkeiten im Bereich von ca. 100 µm. In diesem Bereich liegt auch die Ungenauigkeit der Brennebene diese Fθ-Linsen. In modernen Laserbeärbeitungsvorrichtungen sind jedoch Fertigungsgenauigkeiten von wenigen Mikrometern erreichbar bzw. einregelbar. Dann sind aber auch entsprechend genaue Meßsysteme notwendig, die insbesondere in ihrer Genauigkeit den Fertigungsgenauigkeiten in etwa entsprechen. Mit dem aus der DE 42 06 499 bekannten Meßsystem können die geforderten Genauigkeiten nicht erreicht werden. Dies gilt insbesondere dann, wenn das Meßsystem im Bearbeitungssystem integriert ist, und insbesondere, wenn beide die gleiche Optik verwenden. Das zur Messung herangezogene Prozeßleuchten durchläuft dann einen vergleichsweise weiten Bereich des Abbildungssystems, so daß die genannten Ungenauigkeiten deutlich auftreten. Sie können im Bereich von Zehntel Millimetern liegen.

Aus der DE 42 09 933 ist ein Verfahren zur partiellen Veränderung von Oberflächen metallischer oder nicht-metallischer Körper mit einem Nd:YAG-Laser bekannt. Ein in die Tiefe gehender Materialabtrag ist hier nicht beschrieben.

Die Ausbildung von Gesenken mittels Laserbearbeitungsvorrichtungen erfolgt bisher in der Weise, daß ein schichtweiser Abtrag vorgenommen wird. Die Schichtdicke ist jeweils vorgegeben und wird eingeregelt. Dies hat den Nachteil, daß Leistungsreserven bereitgehalten werden müssen, damit das Regelungsziel in jedem Fall sicher erreicht werden kann. Bekannte Verfahren haben darüber hinaus den Nachteil, daß bei einer Tiefenregelung letztendlich der Regelungserfolg an einem anderen Ort eintritt als dem Meßort. Dies ergibt sich aus der Verarbeitungsgeschwindigkeit der Regelung und der Führungsgeschwindigkeit des Laserstrahls. Während der Verarbeitungsdauer wird der Laserstrahl weiterbewegt, so daß der Regelungserfolg örtlich verschoben auftritt. Dies wird tendenziell auch in weiteren Schichten so sein, so daß Schwierigkeiten hinsichtlich der Tiefeneinregelung auftreten können.

Aus der DE 42 00 632 A1 sind ein Verfahren und eine Vorrichtung zum Bearbeiten von Werkstücken mittels der von einem Laser emittierten Laserstrahlung bekannt. Im dort beschriebenen Verfahren wird ein Ist-Abstand zwischen einem Bezugspunkt und der Oberfläche der Wechselwirkungszone der Bearbeitungsstelle ermittelt, eine Soll/Ist-Wertabweichung zwischen einem vorgegebenen Soll-Abstand und dem erfassten Ist-Abstand ermittelt, amplituden-, pulsweiten- und/ oder frequenzmodellierte Steuerungsimpulse entsprechend der Soll/Ist-Wert-Abweichung ermittelt, die ermittelten Steuerpulse an eine Laseranregungseinheit ausgegeben und den Steuerpulsen entsprechend Laserpulse durch den durch die Lasereinheit angesteuerten Laser ausgegeben, um das Werkstück zu bearbeiten.

Aufgabe der Erfindung ist es, ein Verfahren und eine Vorrichtung zur Tiefeneinregelung bei Laserbearbeitungsvorrichtungen anzugeben, das die Answirkungen von Lauf-und Totzeiten im System verringert.

Diese Aufgabe wird durch die unabhängigen Ansprüche 1,18 gelöst. Abhängige Ansprüche sind auf bevorzugte Ausführungsformen der Erfindung gerichtet.

Eine genaue Tiefenmessung erhält man, indem das eigentliche Sensorsystem insbesondere auf die verwendete Optik geeicht wird. Hierzu wird eine bekannte Eichfläche, vorzugsweise eine Ebene, vermessen. Die tatsächlichen Werte werden dann mit den bekannten Werten verglichen, und nach Maßgabe des Unterschieds werden für die jeweilige Position im Bearbeitungsbereich Korrekturwerte gebildet und gespeichert.

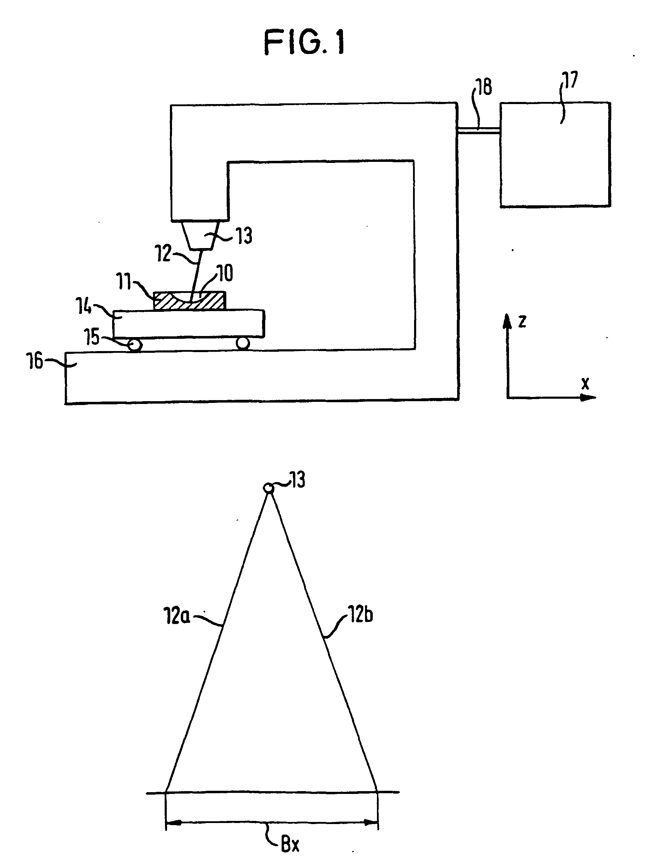

In dieser Beschreibung wird davon ausgegangen, daß die Gesenktiefe in z-Richtung eines rechtwinkligen Koordinatensystems verläuft, während der Bearbeitungsbereich eine Ebene im wesentlichen in der x-y-Ebene des Koordinatensystems ist (siehe Fig. 1). Für den Bearbeitungsbereich Bx, By wird also ein zweidimensionales Korrekturfeld ermittelt, das dann bei den tatsächlichen Messungen zur Korrektur herangezogen werden kann.

Anstatt mit festen Schichtdicken zu arbeiten und deren Einhaltung einzuregeln, ist es auch möglich, die momentane Gesenktiefe z zu bestimmen und sich nach Maßgabe dieser absoluten Gesenktiefe aus der Definition der herzustellenden Form die Begrenzungen in x- und y-Richtung für eine folgende, insbesondere die nächste abzutragende Schicht zu ermitteln. Bei einem wannenförmig nach unten zulaufenden Gebilde könnte beispielsweise festgestellt werden, daß beim Abtrag in einer Schicht tiefer in das Material eingedrungen wurde als vorgesehen. In der nächsten Schicht würden dann engere Grenzen in x- und y-Richtung eingestellt werden.

Eine weitere Verbesserung der Genauigkeit ergibt sich, wenn nicht nur die absolute Gesenktiefe beim Ausrechnen der Grenzen in horizontaler Richtung für die nächste Schicht berücksichtigt wird, sondern auch die derzeit mit den herrschenden Parametern abgetragene Schichtdicke. Mit dieser Schichtdicke Δz kann genauer in z-Richtung der Formdefinition vorgedrungen werden, so daß dementsprechend genauer die Grenzen für die folgende Schicht ausgerechnet werden können.

Um erfindungsgemäß ein "a priori"-Wissen für die Ansteuerung der Vorrichtung zu erzeugen, werden die fortlaufend ermittelten Tiefenmeßwerte gespeichert, insbesondere nach Maßgabe ihrer x- und y-Koordinate. Das dadurch gespeicherte Wissen wird im weiteren Verlauf genutzt, um geeignete Maßnahmen zu veranlassen.

Explizit sei hier noch auf folgendes hingewiesen: Am Anmeldetag dieser Anmeldung hat die Anmelderin eine weitere Anmeldung betreffend Verfahren und Vorrichtungen zur Laserbearbeitung eines Werkstücks eingereicht, nämlich die Anmeldungsnummer PCT/EP98/06217 ("Patching"). (WO-A1-00-18 535 veröffentlicht am 6, 4, 2000). Hiermit und gegebenenfalls später im nachfolgenden Text wird auf diese Anmeldung ausdrücklich Bezug genommen.

Nachfolgend werden bezugnehmend auf die beiliegenden Zeichnungen einzelne Ausführungsformen der Erfindung beschrieben, es zeigen:
Fig. 1 schematisch eine Laserbearbeitungsvorrichtung,
Fig. 2 schematisch als funktionelles Blockdiagramm eine Steuerung bzw. Regelung,
Fig. 3 die Tiefenmeßvorrichtung aus Fig. 2,
Fig. 4 die Steuervorrichtung zur Ermittlung der Abtragsgrenzen in einer Schicht aus Fig. 2,
Fig. 5 die Steuervorrichtung zum Speichern von Meßwerten aus Fig. 2,
Fig. 6 und 7 in Draufsicht und als Querschnitt schematisch ein Werkstück zur Erläuterung von Merkmalen der Erfindung

Fig. 1 zeigt schematisch eine Laserbearbeitungsvorrichtung. Gegebenenfalls erfolgen Betrachtungen anhand des schon genannten rechtwinkligen x-y-z-Koordinatensystems, wobei x und z in der Zeichenebene gezeigt sind und y nach unten durch die Zeichenebene sticht.

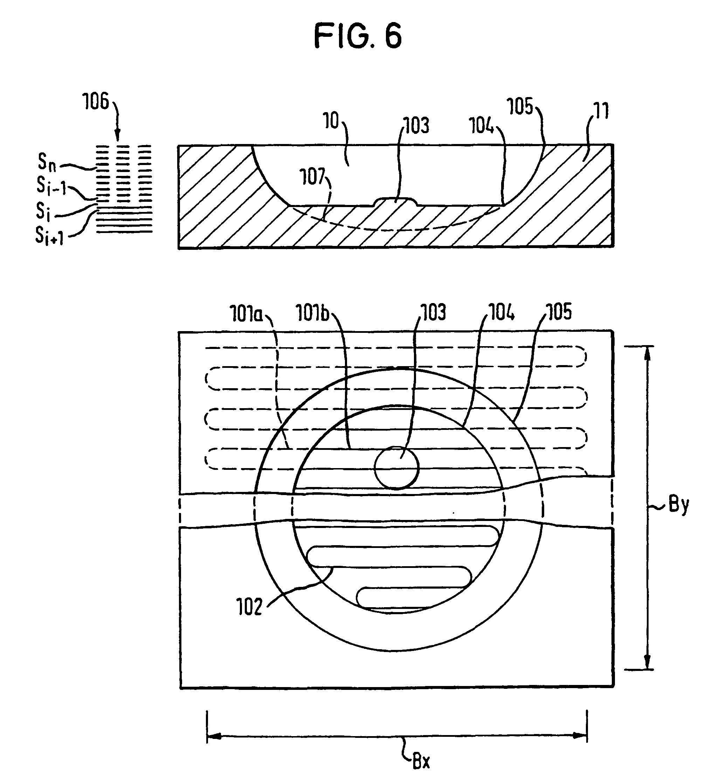

Ein Ständer 16 trägt einen Bearbeitungskopf 13 und einen gegebenenfalls verschieblichen Werkstückträger 14. Im allgemeinen ist eine Relativverschiebung zwischen Kopf 13 und Werkstück 11 zumindest in der x-y-Ebene möglich. Angedeutet ist dies, hier durch Rollen 15 zwischen Werkstückträger 14 und Ständer 16. Statt dessen oder zusätzlich kann auch der Kopf 13 beweglich sein. Im Werkstück 11 wird ein Gesenk 10 ausgebildet. Das Gesenk wird mittels eines Laserstrahls 12 erzeugt. In der Regel erfolgt ein schichtweiser Abtrag dahingehend, daß Schichten, die jeweils an unterschiedlichen Positionen in z-Richtung liegen und sich in der x-y-Ebene erstrecken, nacheinander von oben nach unten abgetragen werden. In Fig. 6 ist dies schematisch gezeigt: Im Querschnitt oben zeigt die Linie 107 zusammen mit den sichtbaren Konturen die zuletzt gewünschte Endform. Sie wird durch schichtweisen Abtrag erzeugt. Die Schichten sind in der Darstellung 106 symbolisiert. Die unterbrochenen Linien stellen bereits abgetragene Schichten dar, während die durchgezogenen Linien noch zu bearbeitende Schichten symbolisieren. Die gerade bearbeitete Schicht wird als Sᵢ bezeichnet, die Schicht davor als Sᵢ₋₁, die Schicht danach als Sᵢ₊₁. Auch Kombinationen der genannten Möglichkeiten sind möglich.

Zum Abtragen einer Schicht sind verschiedene Strategien möglich: Innerhalb des Bearbeitungsbereichs Bx, By des Kopfs wird der Laserstrahl durch eine geeignete Laserstrahlführung über die Fläche geführt. Gezeigt sind mäandernde Ausführungsformen. Im oberen Teil der Draufsicht ist eine Ausführungsform gezeigt, in der die Strahlführung prinzipiell den gesamten Bearbeitungsbereich Bx, By überstreicht, wobei der Laser nur dann angeschaltet wird, wenn er über eine zu bearbeitende Fläche streicht, letztendlich also über den Boden des Gesenks 10. Dies entspricht den durchgezogenen Linien 101b, während die gestrichelten Linien 101a den "Dunkelweg" zeigen. Unten in der Draufsicht ist dagegen eine Ausführungsform gezeigt, in der die Laserstrahlführung den Laser lediglich über die zu bearbeitenden Flächen führt, also über den momentanen Boden des Gesenks. Wenn eine Schicht Sᵢ abgetragen ist, wird mit dem Abtrag in der nächsten Schicht Sᵢ₊₁ fortgefahren.

Der Bearbeitungsbereich Bx, By ist in der Regel durch konstruktive Bedingungen begrenzt. In der Regel handelt es sich um rechteckige Bereiche, außerhalb derer der Laserstrahl nicht mehr geführt werden kann. In Fig. 1 unten ist dies schematisch gezeigt. Hier wird der Bearbeitungskopf als Punktlichtquelle 13 angesehen. Die Auslenkung des Strahls kann zwischen einer weitestmöglich linken Position 12a und einer weitestmöglich rechten Position 12b erfolgen: Dadurch ergibt sich ein Bereich Bx in x-Richtung. Sinngemäß das gleiche gilt für die y-Koordinate.

Die Vorrichtung in Fig. 1 weist eine Steuerung/Regelung 17 auf, die über Leitungen 18 mit der Bearbeitungsvorrichtung verbunden ist. Die Steuerung/Regelung (nachfolgend kurz als Steuerung bezeichnet) 17 kann kompakt oder räumlich verteilt aufgebaut sein. In der Regel wird sie digitale Komponenten aufweisen, beispielsweise einen Prozeßrechner.

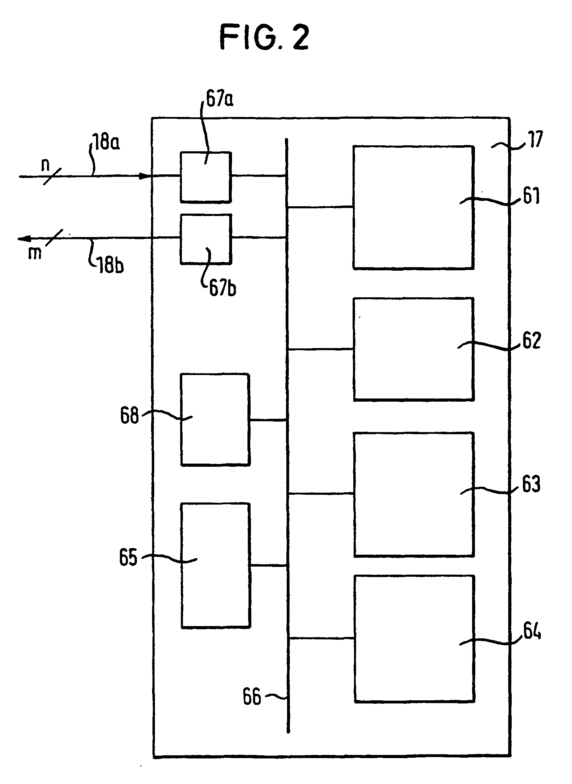

Fig. 2 zeigt schematisch als funktionales Blockdiagramm den Aufbau der Steuerung 17. Es sind n einlaufende Signalleitungen 18a und m auslaufende Signalleitungen 18b vorgesehen. Sie durchlaufen Treiber/ Koppler/Wandler/Aufbereitungskomponenten 67a, 67b, die Umsetzungen betreffend Datenformat, Leistung u.ä. vornehmen. Die Steuerung 17 weist zumindest einen Speicher 64 auf, in dem Daten verschiedenster Art gespeichert werden können. Darüber hinaus sind verschiedene allgemeine Steuerungs- bzw. Regelungsfunktionen 65 vorgesehen (beispielsweise zur Laserstrahltastung, Laserstrahlführung usw.). Durch 68 sind Funktionen symbolisiert, die den in der weiter oben genannten weiteren Anmeldung beschriebenen Funktionen und Merkmalen ("Patching") entsprechen. Sie können zusammen mit den erfindungsgemäßen Funktionen vorgesehen sein und vorteilhafte Wirkungen haben. 66 symbolisiert einen Kanal, der die zwischen den einzelnen notwendige Kommunikation erlaubt. Soweit er als Hardware verstanden werden soll, kann es sich beispielsweise um einen Bus eines Rechners handeln.

61 symbolisiert die Funktion einer erfindungsgemäßen Tiefenmessung, 62 symbolisiert eine erfindungsgemäße Steuerungsfunktion zum Ermitteln der Bearbeitungsgrenzen in einer Schicht Sᵢ, 63 eine erfindungsgemäße Funktion zum Speichern und späteren Auswerten von Meßwerten. Die Funktionen 61-63 arbeiten zumindest mit dem Speicher 64 und je nach Notwendigkeit mit weiteren Funktionen zusammen. Sie können auch mit den in den beiden anderen Anmeldungen beschriebenen Funktionen 68 zusammenarbeiten.

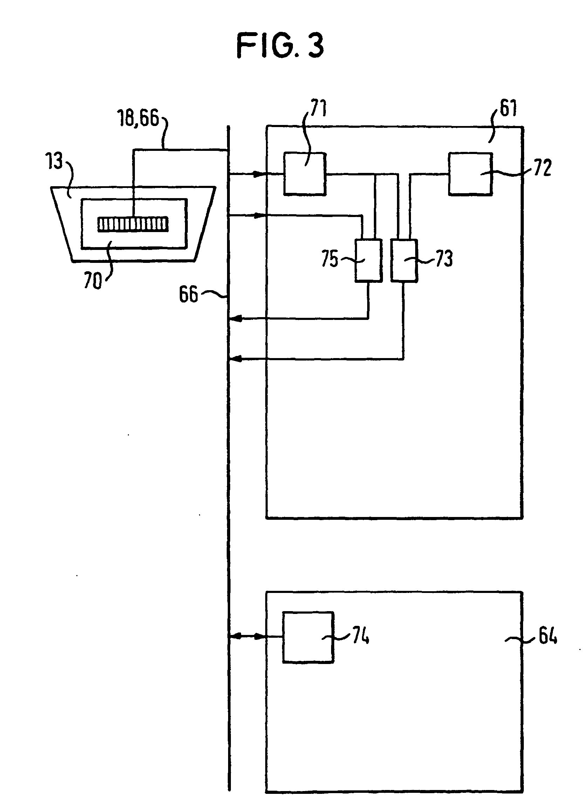

Fig. 3 zeigt beispielhaft eine Ausführungsform einer Tiefenmeßvorrichtung. Gleiche Bezugsziffern wie in den vorherigen Zeichnungen bedeuten gleiche Komponenten. Gezeigt ist eine Ausführungsform, in der der primäre Sensor 70 räumlich mit dem Bearbeitungskopf 13 (zum Emittieren des bearbeitenden Laserstrahls) integriert ist. Insbesondere durchläuft das vom Sensor 70 ausgewertete Prozeßleuchten zumindest bereichsweise die gleiche Optik wie der bearbeitende Laserstrahl. Gezeigt ist ein Zeilensensor, der ein Abbild des Leuchtflecks an der soeben vom Laserstrahl beschienenen Bearbeitungsstelle auf dem Werkstück 11 empfängt. Das Meßprinzip des Sensors kann so wie in der DE OS 42 06 499 beschrieben sein. Der Sensor gibt ein mehr oder minder weit aufbereitetes Signal aus, das in der Steuerung 17 und insbesondere von der erfindungsgemäßen Tiefenmessung 61 empfangen wird. 71 symbolisiert eine komplexere Signalaufbereitung, die ein vergleichsweise rohes Sensorsignal in einen Tiefenwert z (längs der z-Koordinate, Fig. 1) transformiert.

Um genau messen zu können, wird die Tiefenmeßvorrichtung vor der tatsächlichen Tiefenmessung geeicht. Hierzu wird eine Eichfläche vermessen. Die Eichfläche hat eine bekannte Form, vorzugsweise ist sie eben. Vorzugsweise ist die Eichfläche so groß, daß der gesamte Bearbeitungsbereich Bx, By auf ihr Platz findet. In einem Eichdurchgang wird die Höhe der Eichfläche in z-Richtung an verschiedenen Punkten (z.B. rasterförmig verteilt) im Bearbeitungsbereich Bx, By vermessen. Der so gewonnene Meßwert wird mit der bekannten Höhe der Eichfläche (symbolisiert 72) in einer Vergleichseinrichtung 73 verglichen. Der Unterschied ist ein Maß für den Meßfehler. Der Unterschied kann positionsabhängig im Speicher 74 gespeichert werden bzw. zur Ermittlung eines Korrekturwerts, der seinerseits positionsabhängig gespeichert wird, dienen. "Positionsabhängig" in diesem Zusammenhang bedeutet in Abhängigkeit von der Position in x- bzw. y-Richtung im Bearbeitungsbereich Bx, By. Die x- und y-Koordinaten sind der Steuerung 17 aus den allgemeinen Funktionen 65 bekannt.

Während des Eichens wird damit ein flächiges Korrekturfeld gespeichert, das dann zur Korrektur der eigentlichen Meßwerte verwendet werden kann. Dies ist durch Komponente 75 symbolisiert. Sie empfängt einen tatsächlichen Meßwert über Sensor 70, Leitungen 18, 66 und Signalformung 71. Darüber hinaus empfängt sie einen Korrekturwert aus Speicher 74, der seiner Position nach der Tiefenmeßposition entspricht. In der Korrekturvorrichtung 75 wird der gemessene Wert korrigiert und für weitere Systemfunktionen ausgegeben bzw. bereitgehalten. Die Korrektur kann additiv und/oder multiplikativ erfolgen. Es kann auch ein Kennfeld vorgesehen sein. Es kann auch eine Korrektur nach Maßgabe der absoluten Tiefe z vorgesehen sein.

Im Eichvorgang kann die Eichfläche mehrmals vermessen werden, wobei sie zwischen den einzelnen Messungen in horizontaler Richtung (x und/oder y) verschoben werden kann. Es werden dann für die einzelnen Positionen im Bearbeitungsbereich Bx, By Korrekturwerte nach Maßgabe der verschiedenen für die jeweilige Position x, y im Bearbeitungsbereich Bx, By gewonnenen Meßwerte ermittelt (Mittelung, Interpolation o.ä.). Auch zur Korrektur tatsächlicher Meßwerte können Interpolationen oder Mittelungen zwischen einzelnen Korrekturwerten erfolgen, insbesondere dann, wenn für den momentanen Meßort kein oder nur ein entfernt gelegener Korrekturwert vorhanden ist.

Die erfindungsgemäße Eichung bzw. die erfindungsgemäße Tiefenmessung erlaubt eine Meßgenauigkeit im Bereich weniger Mikrometer, vorzugsweise unter 1 µm. Die Korrekturwerte können, sofern es sich um additive Korrekturwerte handelt, einem Wert von bis zu 1 mm oder mehr entsprechen.

Die eben beschriebene Tiefenmessung in z-Richtung kann, muß aber nicht in den nachfolgend zu beschreibenden Funktionen verwendet werden.

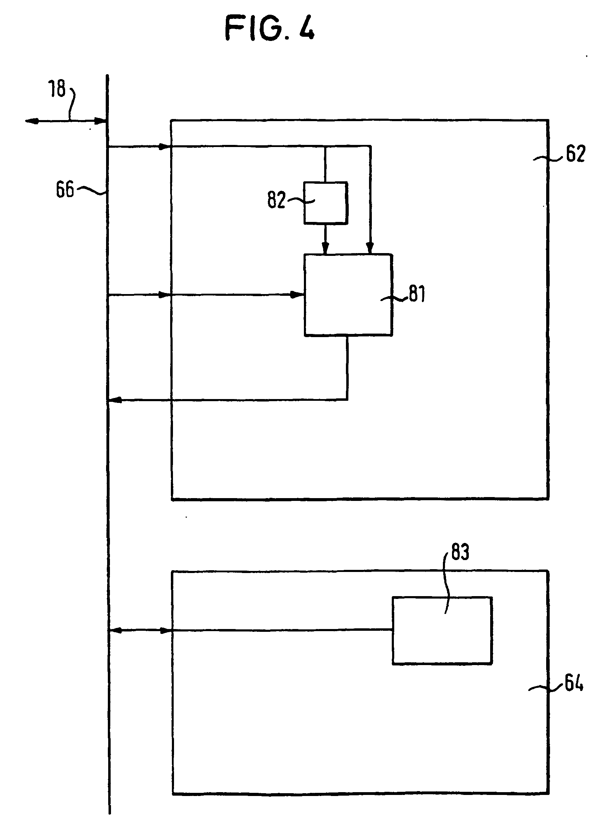

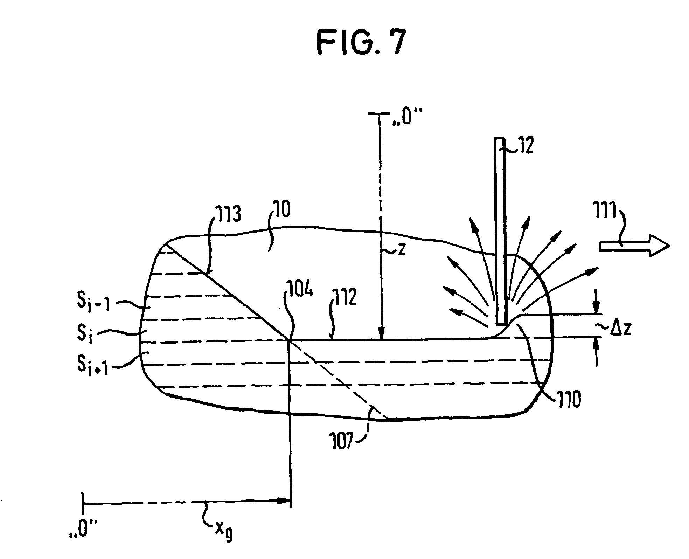

Fig. 4 zeigt schematisch eine Steuerung für den Schichtabtrag. Die zugrundeliegenden Überlegungen werden anhand von Fig. 7 erläutert. Gleiche Bezugsziffern bedeuten dort gleiche Merkmale wie in früheren Figuren. Gezeigt ist in Fig. 7 der auf dem Boden 112 des Gesenks 10 einfallende Laserstrahl 12. Durch die Laserstrahlführung wird eine Vorschubrichtung des Laserstrahls 12 in Richtung des Pfeils 111 angenommen (hier also in x-Richtung). Material der Schicht Sᵢ verdampft und verflüssigt und wird dadurch abgetragen. Symbolisiert wird dies durch die von der Bearbeitungsstelle 110 wegstrebenden Pfeile. Die Dicke einer Schicht wird zu Az angenommen, die absolut gemessene Tiefe zu z. Die Wandung 113 des Gesenks 10 soll auch in den tieferen Schichten der Kontur 107 folgen. Die Grenze x_{g} zum Abtrag in der folgenden Schicht Sᵢ₊₁ hängt insbesondere bei schrägen Wänden demnach von der Tiefe z ab, ein dz führt zu einem dx_{g}. Solange es möglich ist, von Schicht zu Schicht die Tiefe z auf vorbestimmte Werte einzustellen, können auch die Grenzen des Schichtabtrags in einer Schicht x_{g} (und entsprechend y_{g}) vorab gesetzt und dann eingestellt werden. Dies entspricht einer festen Programmierung des Geräts. Es kann aber wünschenswert sein, diese Schichtdicken - nicht einzuhalten. Manchmal kann es auch technisch nicht möglich sein. Es ist dann vorteilhaft, ausgehend von der tatsächlichen Tiefe z für die nächste Schicht Sᵢ₊₁ die Abtragsgrenzen in der x-y-Ebene zu bestimmen, da eine Veränderung von z auch eine Veränderung von x_{g} und y_{g} zur Folge hat. Dies entspricht einer veränderlichen Programmierung. Eine Vorrichtung zur Umsetzung dieses Gedankens.ist in Fig. 4 schematisch gezeigt. Sie weist eine Steuervorrichtung 81 auf, die die horizontalen Grenzen x_{g}, y_{g} für den Abtrag in einer folgenden Schicht, insbesondere Sᵢ₊₁ nach Maßgabe der Gesenktiefe z aus der Formdefinition, die in einem Speicher 83 gespeichert ist, ermittelt. Zu diesem Zweck empfängt die Steuervorrichtung 81 einerseits Daten, die die Formdefinition darstellen, und andererseits die Tiefe z (bzw. einen daraus hergeleiteten Wert, beispielsweise gefiltert oder gemittelt). Aus diesen Daten können die Grenzen x_{g}, y_{g} in horizontaler Richtung des Schichtabtrags ermittelt werden und herkömmlichen Komponenten 65 zur Einregelung dieser Werte zugeführt werden.

Eine weitere Erhöhung der Genauigkeit ergibt sich, wenn zur Ermittlung der Abtragsgrenzen x_{g}, y_{g} nicht nur die absolute Tiefe z berücksichtigt wird, sondern auch die mit den momentanen Parametern gerade abgetragene Schichtdicke Δz. Es muß dann nicht mit einem theoretischen Wert für die Schichtdicke "in die Tiefe des Gesenks gerechnet" werden, sondern es kann die momentan tatsächlich abgetragene Schichtstärke verwendet werden.

Wenn nur die gemessene absolute Tiefe z zur Grenzermittlung (zusammen mit einem theoretischen Wert für die Schichtdikke) berücksichtigt wird, wird das Entstehen eines kumulativen Fehlers vermieden, und es entsteht allenfalls ein nicht-kumulativer Fehler entsprechend dem Unterschied zwischen theoretischer und tatsächlicher Schichtdicke, der von Fall zu Fall hinnehmbar sein kann. Wenn auch die tatsächliche Schichtdicke Δz bei der Grenzermittlung berücksichtigt wird, wird auch die Entstehung dieses Restfehlers vermieden.

Fig. 4 zeigt mit 82 eine Einrichtung zur Ermittlung der Schichtdicke. Sie kann beispielsweise so ausgelegt sein, daß sie sich Meßwerte z der früheren Schicht Sᵢ₋₁ gemerkt hat und dann Meßwerte beim Abtrag der Schicht Sᵢ damit vergleicht. Der Unterschied entspricht der Schichtdicke Δz. Auch hier können gefilterte oder gemittelte Werte verwendet werden.

Die Formdefinition des Gesenks kann beispielsweise in Form von CAD-Daten im Speicher 83 gespeichert sein. Bei der Vorrichtung 81 handelt es sich gegebenenfalls um eine vergleichsweise komplexe Struktur, die aus dieser Art der im Speicher 83 abgelegten Daten Schnittkanten zwischen einer Ebene (entsprechend einem Wert von z + Δz) und einer Form (entsprechend der Formdefinition des Gesenks) berechnen kann.

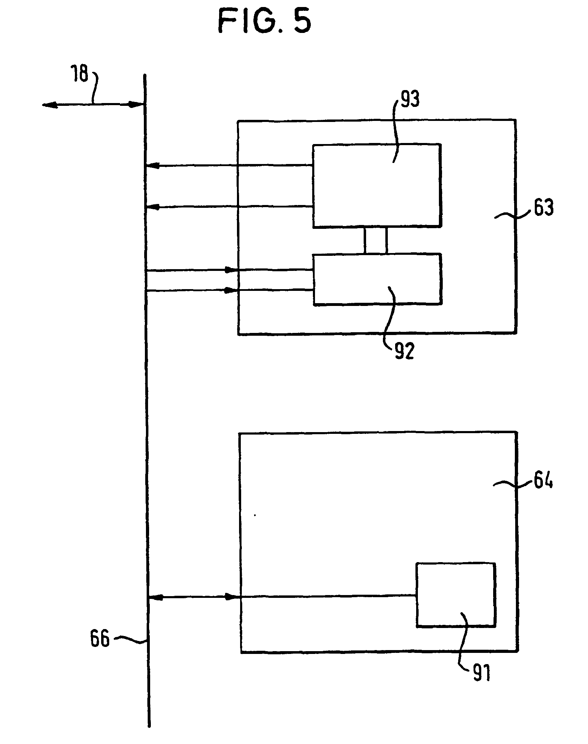

Fig. 5 zeigt die erfindungsgemäß Funktion, die die fortlaufend gemessenen Tiefendaten z fortlaufend speichert. Die Speicherung erfolgt vorzugsweise an Speicherstellen entsprechend der Position der vermessenen Stelle im Bearbeitungsbereich der Vorrichtung. Nicht immer ist es möglich, den momentanen Boden 112 so eben herzustellen, wie dies in Fig. 7 gezeigt ist. Vielmehr können Welligkeiten oder Inseln bzw. Dellen auftreten. In Fig. 6 ist mit Bezugszeichen 103 eine Insel symbolisiert. Betrachtet man den Vorschub des Laserstrahls 12 in Fig. 7 in Richtung des Pfeils 111, so läßt sich eine Vorschubgeschwindigkeit vₓ bestimmen. Geht man nun andererseits davon aus, daß die Reaktionsgeschwindigkeit des Systems auf eine Messung begrenzt ist, läßt sich eine Zeit t_{R} als Reaktionszeit bestimmen, die verstreicht, bis ein gemessener Wert von z zu einer Beeinflussung des Lasers 12 führen kann. Wegen der Reaktionszeit t_{R} und der Vorschubgeschwindigkeit vₓ werden Regelungseingriffe prinzipiell , räumlich versetzt wirksam. Regelungstechnisch entspricht dies einer Totzeit. In ungünstigen Fällen kann es zu Schwingungen (Welligkeiten) kommen. Der Versatz entspricht Δx = vₓ · t_{R} und liegt durchaus im Bereich der betrachteten Genauigkeiten (z.B. vₓ = 0,1 m/s, t_{R} = 0,5 ms, Δx = 50 µm). Um solche nachteiligen Effekte auszugleichen, kann es wünschenswert sein, Meßwerte für die Tiefe z zu speichern und später zu berücksichtigen. Dies kann zu einer der Regelung über- bzw. unterlagerten Steuerung nach Maßgabe der gespeicherten Tiefendaten führen.

Wenn die Tiefe z kontinuierlich bzw. quasi-kontinuierlich gemessen wird, kann sie ebenso kontinuierlich in einen Speicher 91 eingeschrieben werden und später in geeigneter Weise wiederverwendet werden. Im Speicher 91 entsteht dann eine Topographie bzw. Kartographierung des momentanen Gesenkbodens, die flächig die jeweils gemessenen Tiefenwerte z wiedergibt. Die Dichte der Meßpunkte auf der Fläche ist zu hohen Werten hin in Vorschubrichtung des Laserstrahls durch die Vorschubgeschwindigkeit vₓ und die Reaktionszeit t_{R} begrenzt und darunter wählbar. Bei mäandernder Flächenabdeckung gemäß Fig. 7 ist die Dichte der Meßpunkte in Richtung quer zur Vorschubrichtung durch den Spurabstand der Mäander bestimmt.

Wenn die Kartographierung bzw. die Topographie beispielsweise eine Insel 103 zeigt, kann dieses a priori-Wissen zum Ausgleichen der Unregelmäßigkeit benutzt werden, ohne daß der Zeitversatz aufgrund der System-Reaktionszeit die Fehlerkorrektur verhindert. Im Bereich einer erkannten Unregelmäßigkeit können aufgrund des a priori-Wissens die Wechselwirkungsparameter des Lasers verändert werden (bei Inseln in Richtung stärkerer Abtrag, bei Dellen in Richtung schwächerer Abtrag), oder es können bei größeren Abweichungen zusätzliche Schichten zum Abtrag lediglich der Unregelmäßigkeiten (der Insel oder des Landes um eine Delle) eingeschoben werden.

Das Verändern der Wechselwirkungsparameter des Laserstrahls kann geschehen, wenn innerhalb derselben Schicht der Laserstrahl wieder in der Nähe des Fehlers vorbeistreicht (z.B. in der Nachbarspur bei mäandernder Führung gemäß Fig. 6). Dies geht davon aus, daß die Laserstrahleinwirkungen nicht exakt auf eine Spur begrenzbar sind. Vielmehr ist der Einwirkungsbereich unscharf abgegrenzt, so daß der auf den momentanen Gesenkboden eintreffende Laserstrahl nicht nur Wirkungen in der "idealen", gerade betrachteten Spur hat, sondern auch in benachbarten Spuren. Darüber hinaus können die Wechselwirkungsparameter des Laserstrahls auch in folgenden Schichten, beispielsweise in der nächsttieferen Schicht geändert werden, um eine Unregelmäßigkeit, die in einer früheren Schicht erkannt wurde, auszugleichen.

Bei der beschriebenen Einstellung der Wechselwirkungsparameter nach Maßgabe der gespeicherten Gesenktiefendaten im Sinne einer Steuerung kann die Regelung des Lasers nach Maßgabe der aktuell gemessenen Werte beibehalten werden. Der Laser kann aber auch ohne diese Regelung nach Maßgabe der aktuell gemessenen Werte betrieben werden, so daß er nur nach Maßgabe der gespeicherten Parameter angesteuert wird.

Die beschriebene Kartographierung kann vorteilhaft in Verbindung mit der anhand von Fig. 4 beschriebenen Ermittlung der Abtragsgrenzen in horizontaler Richtung kombiniert werden. Einzeln oder in Kombination miteinander können diese Techniken in Verbindung mit dem beschriebenen Meßaufbau (Bezugnahme auf eine Eichkurve) verwendet werden. Das anhand von Fig. 5 beschriebene Kartographierungsverfahren kann auch zusammen mit dem in der weiteren Anmeldung des Anmelders Nr. PCT/EP98/06217 ("Patching") beschriebenen Verfahren zur Einstellung der Relativposition verwendet werden. Beispielsweise können Relativpositionen zwischen Bearbeitungskopf und Werkstück so gewählt werden, daß kritische Bereiche im Werkstück (beispielsweise eine Insel 103 oder eine Delle) nicht in den Randbereich des Bearbeitungsbereichs der Vorrichtung gelangen, so daß eine zuverlässige Bearbeitung der entsprechenden Stelle möglich wird.

## Patentansprüche

1. Verfahren zur Herstellung eines definiert geformten Gesenks (10) in einem Werkstück (11) mit einer Laserbearbeitungsvorrichtung (12 - 18), die schichtweise Material des Werkstücks entsprechend der definierten Form abträgt, wobei die Gesenktiefe (z) fortlaufend gemessen wird,
**dadurch gekennzeichnet, daß**
die Meßwerte fortlaufend zusammen mit den jeweiligen Koordinaten (x, y) oder an Speicherstellen entsprechend den jeweiligen Koordinaten gespeichert und zur späteren Ansteuerung der Laserbearbeitungsvorrichtung verwendet werden.

2. Verfahren nach Anspruch 1, **dadurch gekennzeichnet, daß** ein gespeicherter Meßwert verwendet wird, wenn innerhalb derselben Schicht der Laser sich in der Nähe der dem Meßwert entsprechenden Stelle befindet und/oder wenn in einer tieferen Schicht der Laser sich in der Nähe oder an der dem Meßwert entsprechenden Stelle befindet.

3. Verfahren nach Anspruch 1 oder 2, **dadurch gekennzeichnet, daß** ein Meßwert zur augenblicklichen oder späteren Einstellung von Wechselwirkungsparametern des Laserstrahls herangezogen wird.

4. Verfahren nach Anspruch 3, **dadurch gekennzeichnet, daß** die Laseramplitude und/oder die Impulsüberhöhung und/oder das Tastverhältnis eines gepulsten Lasers eingestellt werden.

5. Verfahren nach einem der Ansprüche 1 bis 4, **dadurch gekennzeichnet, daß** die gespeicherten Meßwerte zum Abtrag einer Teilschicht (103) herangezogen werden.

6. Verfahren nach einem der vorherigen Ansprüche, bei dem zur Tiefenmessung mittels eines Tiefensensors ein von der Bearbeitungsstelle ausgehendes Licht herangezogen wird,
**dadurch gekennzeichnet, daß**
der Tiefensensor geeicht wird,
eine Tiefe an einer bestimmten Stelle des Gesenks gemessen wird,
der Meßwert nach Maßgabe der Position der Stelle bezugnehmend auf die gespeicherten Korrekturwerte korrigiert wird, und
der korrigierte Wert als gemessene Tiefe verwendet wird.

7. Verfahren nach Anspruch 6, **dadurch gekennzeichnet, daß** die Korrektur additiv und/oder multiplikativ erfolgt.

8. Verfahren nach Anspruch 6 oder 7, **dadurch gekennzeichnet, daß** eine Korrektur nach Maßgabe der Gesenktiefe erfolgt.

9. Verfahren nach einem der Ansprüche 6 bis 8, **dadurch gekennzeichnet, daß**
zum Eichen des Tiefensensors die Tiefen von Meßpunkten auf einer Eichfläche mit bekannter Form gemessen werden,
die Meßwerte mit den an den jeweiligen Meßpunkten der Eichfläche bekannten Werten verglichen werden, und Korrekturwerte nach Maßgabe von Unterschieden zwischen Meßwerten und bekannten Werten zusammen mit den jeweiligen Koordinaten oder an Speicherstellen entsprechend den jeweiligen Koordinaten gespeichert werden.

10. Verfahren nach Anspruch 9, **dadurch gekennzeichnet, daß** der Tiefensensor ein von der Bearbeitungsstelle ausgehendes Licht zur Tiefenmessung heranzieht und das Laserlicht mit Hilfe einer Laserstrahlführung innerhalb eines durch die Vorrichtung vorgegebenen Bearbeitungsbereichs über die Fläche des Werkstücks, geführt wird.

11. Verfahren nach Anspruch 9 oder 10, **dadurch gekennzeichnet, daß** die Eichfläche eine Ebene ist.

12. Verfahren nach Anspruch 11, **dadurch gekennzeichnet, daß** die Eichebene mehrmals vermessen wird, wobei sie zwischen einzelnen Messungen relativ zum Meßsystem in horizontaler Richtung verschoben wird und wobei für einander im Arbeitsbereich entsprechende oder nahe beieinanderliegende Meßpunkte Korrekturwerte nach Maßgabe aller Messungen für diesen Meßpunkt gebildet und für diesen Meßpunkt gespeichert wird.

13. Verfahren nach einem der Ansprüche 9 bis 12, **dadurch gekennzeichnet, daß** der Abstand zwischen Meßpunkten in Vorschubrichtung des Laserstrahls durch die Verarbeitungsgeschwindigkeit eines digitalen Systems und durch die Vorschubgeschwindigkeit des Laserstrahls bestimmt ist.

14. Verfahren nach Anspruch 11, **dadurch gekennzeichnet, daß** die Eichebene eine Welligkeit von kleiner 5 µm, vorzugsweise kleiner 1 µm hat.

15. Verfahren nach einem der vorherigen Ansprüche,
**dadurch gekennzeichnet, daß**
die Grenzen (x_{g}, y_{g}) in horizontaler Richtung für den Abtrag in einer folgenden Schicht (Sᵢ₊₁) nach Maßgabe der Gesenktiefe (z) aus der Formdefinition des Gesenks ermittelt werden.

16. Verfahren nach Anspruch 15, **dadurch gekennzeichnet, daß** die Dicke (Δz) einer abgetragenen Schicht (Sᵢ) aus gemessenen Gesenktiefen ermittelt wird, und die Grenzen (x_{g}, y_{g}) in horizontaler Richtung für den Abtrag in einer folgenden Schicht (Sᵢ₊₁) auch nach Maßgabe der ermittelten Schichtdicke (Δz) aus der Formdefinition des Gesenks ermittelt werden.

17. Verfahren nach Anspruch 15 oder 16, **dadurch gekennzeichnet, daß** die Ermittlung der Abtragsgrenzen (x_{g}, y_{g}) einer Schicht (Sᵢ, Sᵢ₊₁) bezugnehmend auf gespeicherte Formdaten des Gesenks (10) erfolgt.

18. Vorrichtung zur Herstellung eines definiert geformten Gesenks (10) in einem Werkstück (11), mit
einer Laserbearbeitungsvorrichtung (12-18), die schichtweise Material des Werkstücks (11) entsprechend der definierten Form abträgt, und
einer Meßvorrichtung, die die Gesenktiefe (z) fortlaufend mißt,
**gekennzeichnet durch**
eine Speichervorrichtung (91), die die Meßwerte fortlaufend zusammen mit den jeweiligen Koordinaten oder an Speicherstellen entsprechend den jeweiligen Koordinaten speichert, und
eine Steuervorrichtung (63, 92,93), die die Laserbearbeitungsvorrichtung (12-18) nach Maßgabe der gespeicherten Meßwerte spater ansteuert.

19. Vorrichtung nach Anspruch 18, **dadurch gekennzeichnet, daß** die Steuervorrichtung einen gespeicherten Meßwert verwendet, wenn innerhalb derselben Schicht der Laser sich in der Nähe der dem Meßwert entsprechenden Stelle befindet und/oder wenn in einer tieferen Schicht der Laser sich in der Nähe oder an der dem Meßwert entsprechenden Stelle befindet.

20. Vorrichtung nach Anspruch 18 oder 19, **dadurch gekennzeichnet, daß** die Steuervorrichtung einen Meßwert zur augenblicklichen oder späteren Einstellung von Wechselwirkungsparametern des Laserstrahls heranzieht.

21. Vorrichtung nach einem der Ansprüche 18 bis 20,
**gekennzeichnet durch** ,
eine Steuervorrichtung (81), die die Grenzen (x_{g}, y_{g}) in horizontaler Richtung für den Abtrag in einer folgenden Schicht (Sᵢ₊₁) nach Maßgabe der Gesenktiefe (z) aus der Formdefinition ermittelt.

22. Vorrichtung nach Anspruch 21, **dadurch gekennzeichnet, daß** die Steuervorrichtung eine Ermittlungseinrichtung (82) zum Ermitteln der Dicke (Δz) einer abgetragenen Schicht (Sᵢ) aus gemessenen Gesenktiefen aufweist, und wobei die Steuervorrichtung (81) die Grenzen (x_{g}, y_{g}) in horizontaler Richtung für den Abtrag in einer folgenden Schicht (Sᵢ₊₁) auch nach Maßgabe der ermittelten Schichtdicke (Δz) aus der Formdefinition ermittelt.

23. Vorrichtung nach Anspruch 21 oder 22, **gekennzeichnet durch** einen Speicher (83) zur Speicherung der Formdefinition des Gesenks (10).

24. Vorrichtung nach einem der Ansprüche 18 bis 2.3, wobei die Laserbearbeitungsvorrichtung (12-18) das Laserlicht mit Hilfe einer Laserstrahlführung innerhalb eines durch die Vorrichtung vorgegebenen Bearbeitungsbereichs über die Fläche des Werkstücks führt, mit einem Tiefensensor (70; 71), der ein von der Bearbeitungsstelle ausgehendes Licht zur Tiefenmessung heranzieht und einen Meßwert erzeugt,
**gekennzeichnet durch**
eine Eichvorrichtung (72-74), die zur Vermessung einer vorzugsweise ebenen Eichfläche ausgelegt ist und einen Speicher (73) zur Abspeicherung von Korrekturwerten nach Maßgabe von Unterschieden zwischen Meßwerten und bekannten Werten zusammen mit den jeweiligen Koordinaten oder an Speicherstellen entsprechend den jeweiligen Koordinaten aufweist, und
eine Korrekturvorrichtung (74, 75), die den Meßwert nach Maßgabe der Position der Stelle bezugnehmend auf die im Speicher (74) gespeicherten Korrekturwerte korrigiert.

25. Vorrichtung nach Anspruch 24, **dadurch gekennzeichnet, daß** die Korrektur additiv und/oder multiplikativ erfolgt.

26. Vorrichtung nach Anspruch 24 oder 25, **dadurch gekennzeichnet, daß** eine Korrektur nach Maßgabe der Gesenktiefe erfolgt.

## Claims

1. Method for producing a die (10) formed in a defined way in a workpiece (11) with a laser processing device (12 - 18) which removes material of the workpiece layer by layer according to the defined form wherein the depth of the die (z) is continuously measured,
**characterised in that**
the measurement values are continuously stored together with the coordinates (x, y) or at storage points corresponding to the coordinates and used for subsequent control of the laser processing device.

2. Method according to claim 1, **characterised in that** a stored measurement value is used if within the same layer the laser is in proximity to the point corresponding to the measurement value and / or if in a deeper layer the laser is in proximity to or at the point corresponding to the measurement value.

3. Method according to claim 1 or 2, **characterised in that** a measurement value is used for momentary or subsequent setting of interaction parameters of the laser beam.

4. Method according to claim 3, **characterised in that** the laser amplitude and / or the pulse step and / or the mark space ratio of a pulsed laser is set.

5. Method according to one of the claims 1 to 4, **characterised in that** the stored measurement values are used for the removal of a partial layer (103).

6. Method according to one of the preceding claims, wherein a light emitted from the processing point is used for the depth measurement by means of a depth sensor,
**characterised in that**
the depth sensor is calibrated,
a depth at a certain point of the die is measured,
the measurement value is corrected according to the position of the point with reference to the stored correction values, and
the corrected value is used as a measured depth.

7. Method according to claim 6, **characterised in that** the correction is effected additively or multiplicatively.

8. Method according to claim 6 or 7, **characterised in that** a correction is effected according to the depth of the die.

9. Method according to one of the claims 6 to 8,
**characterised in that**
the depths of measurement points on a calibration area with the known form are measured for the purpose of calibration of the depth sensor,
the measurement values are compared with the values known at the measurement points of the calibration area, and
correction values are stored according to differences between measurement values and known values together with the coordinates or stored at storage points corresponding to the coordinates.

10. Method according to claim 9, **characterised in that** the depth sensor uses a light emitted from the processing point for the purpose of depth measurement and the laser light is guided over the area of the workpiece with the aid of a laser light guide within a processing region specified by the device.

11. Method according to claim 9 or 10, **characterised in that** the calibration area is a plane.

12. Method according to claim 11, **characterised in that** the calibration plane is measured several times wherein it is displaced between individual measurements relative to the measurement system in a horizontal direction and wherein for measurement points corresponding to each other in the work region or measurement points lying close to each other correction values are formed according to all measurements for this measurement point and stored for this measurement point.

13. Method according to one of the claims 9 to 12, **characterised in that** the distance between measurement points in the feed direction of the laser beam is determined by the processing speed of a digital system and by the feed speed of the laser beam.

14. Method according to claim 11, **characterised in that** the calibration plane has a ripple smaller than 5 µm, preferably smaller than 1 µm.

15. Method according to one of the preceding claims,
**characterised in that**
the boundaries (X_{g}, Y_{g}) in the horizontal direction for the removal in a following layer (S₁₊₁) are ascertained according to the depth of the die (z) from the form definition of the die.

16. Method according to claim 15, **characterised in that** the thickness (Δz) of a removed layer (S₁) is ascertained from measured die depths and the boundaries (X_{g}, Y_{g}) are ascertained in a horizontal direction for the removal in a following layer (S₁₊₁) also according to the ascertained layer thickness (Δz) from the form definition of the die.

17. Method according to claim 15 or 16, **characterised in that** the ascertaining of the removal boundaries (X_{g}, y_{g}) of a layer (S₁, S₁₊₁) is effected with reference to stored form data of the die.

18. Apparatus for producing a die (10) formed in a defined way in a workpiece (11), with
a laser processing device (12-18) which removes material of the workpiece (11) layer by layer corresponding to the defined form, and
a measurement device which continuously measures the depth of the die (z),
**characterised by**
a storage device (91) which continuously stores the measurement values together with the coordinates or at storage points corresponding to the coordinates, and
a control device (63, 92, 93) which later controls the laser processing device (12 - 18) according to the stored measurement values.

19. Apparatus according to claim 18, **characterised in that** the control device uses a stored measurement value if within the same layer the laser is in proximity to the point corresponding to the measurement value and / or if in a deeper layer the laser is in proximity to or at the point corresponding to the measurement value.

20. Apparatus according to claim 18 or 19, **characterised in that** the control device uses a measurement value for the momentary or later setting of interaction parameters of the laser beam.

21. Apparatus according to one of the claims 18 to 20,
**characterised by**
a control device (81) which determines the boundaries (X_{g}, Y_{g}) in the horizontal direction for the removal in a following layer (S₁₊₁) according to the depth of the die (z) from the form definition.

22. Apparatus according to claim 21, **characterised in that** the control device has an ascertaining device (82) for ascertaining the thickness (Δz) of a removed layer (S₁) from measured die depths, and wherein the control device (81) ascertains the boundaries (X_{g}, y_{g}) in the horizontal direction for the removal in a following layer (S₁₊₁) also according to the ascertained layer thickness (Δz) from the form definition.

23. Apparatus according to claim 21 or 22, **characterised by** a storage device (83) for storing the form definition of the die (10).

24. Apparatus according to one of the claims 18 to 23, wherein the laser processing device (12 - 18) guides the laser light over the area of the workpiece with the aid of a laser light control within a processing region specified by the device, with
a depth sensor (70, 71) which uses a light emitted from the processing point for depth measurement and produces a measurement value,
**characterised by**
a calibration device (72 - 72) which is designed to measure a preferably planar calibration area and a storage device (73) for storing correction values according to differences between measurement values and known values together with the coordinates or at storage points corresponding to the coordinates, and
a correction device (74, 75) which corrects the measurement value according to the position of the point with reference to the correction values stored in the storage device (74).

25. Apparatus according to claim 24, **characterised in that** the correction is effected additively or multiplicatively.

26. Apparatus according to claim 24 or 25, **characterised in that** a correction is effected according to the depth of the die.

## Revendications

1. Procédé de fabrication d'une matrice (10) formée de manière définie dans une pièce à usiner (11) avec un dispositif d'usinage par laser (12-18) qui enlève des couches successives de matière de la pièce à usiner selon la forme définie, sachant que la profondeur de matrice (z) est mesurée en continue,
**caractérisé en ce que**
les valeurs mesurées sont mémorisées en continu conjointement avec les coordonnées respectives (x, y) ou au niveau d'emplacements de mémoire suivant les coordonnées respectives et sont utilisées pour un futur contrôle du dispositif d'usinage par laser.

2. Procédé selon la revendication 1, **caractérisé en ce qu'**une valeur mesurée mémorisée est utilisée lorsqu'à l'intérieur de la même couche le laser se situe à proximité de l'emplacement correspondant à la valeur mesurée et/ou lorsque dans une couche plus profonde le laser se trouve à proximité ou au niveau de l'emplacement correspondant à la valeur mesurée.

3. Procédé selon la revendication 1 ou 2, **caractérisé en ce qu'**une valeur mesurée est utilisée pour le réglage immédiat ou ultérieur de paramètres d'interaction du rayon laser.

4. Procédé selon la revendication 3, **caractérisé en ce que** l'amplitude du laser et/ou l'augmentation excessive des impulsions et/ou le facteur d'utilisation des impulsions d'un laser pulsé est réglé.

5. Procédé selon l'une des revendications 1 à 4, **caractérisé en ce que** les valeurs mesurées mémorisées sont utilisées pour l'enlèvement d'une couche partielle (103).

6. Procédé selon l'une des revendications précédentes, dans lequel une lumière provenant de l'emplacement d'usinage est utilisée pour la mesure de la profondeur au moyen d'un capteur de profondeur,
**caractérisé en ce que**
le capteur de profondeur est étalonné, **en ce qu'**une profondeur est mesurée au niveau d'un emplacement déterminé de la matrice, **en ce que** la valeur mesurée est corrigée selon la position de l'emplacement par rapport aux valeurs de correction mémorisées, et **en ce que** la valeur corrigée est utilisée comme profondeur mesurée.

7. Procédé selon la revendication 6, **caractérisé en ce que** la correction s'effectue de manière additive et/ou multiplicative.

8. Procédé selon la revendication 6 ou 7, **caractérisé en ce qu'**une correction se fait suivant la profondeur de matrice.

9. Procédé selon l'une des revendications 6 à 8,
**caractérisé en ce que**
pour étalonner le capteur de profondeur, les profondeurs des points de mesure sont mesurées sur une surface d'étalonnage de forme connue, **en ce que**
les valeurs mesurées sont comparées aux valeurs connues aux points respectifs de mesure de la surface d'étalonnage et **en ce que**
les valeurs de correction sont mémorisées suivant les différences entre valeurs mesurées et valeurs connues, conjointement avec les coordonnées respectives ou au niveau des emplacements de mémoire selon les coordonnées respectives.

10. Procédé selon la revendication 9, **caractérisé en ce que** le capteur de profondeur se sert d'une lumière provenant de l'emplacement d'usinage pour mesurer la profondeur et la lumière laser est guidée à l'aide d'un système de guidage du rayon laser à l'intérieur d'une zone d'usinage déterminée au préalable par le dispositif sur la surface de la pièce à usiner.

11. Procédé selon la revendication 9 ou 10, **caractérisé en ce que** la surface d'étalonnage est un plan.

12. Procédé selon la revendication 11, **caractérisé en ce que** le plan d'étalonnage est mesuré à plusieurs reprises, sachant qu'entre chaque mesure il est déplacé dans la direction horizontale par rapport au système de mesure et sachant que pour des points de mesure correspondant les uns aux autres dans la zone de travail ou très proches les uns des autres, des valeurs de correction sont formées suivant l'ensemble des mesures pour ce point de mesure et sont mémorisées pour ce point de mesure.

13. Procédé selon l'une des revendications 9 à 12, **caractérisé en ce que** la distance entre les points de mesure dans la direction de l'avance du rayon laser est déterminée par la vitesse de traitement d'un système numérique et par la vitesse d'avance du rayon laser.

14. Procédé selon la revendication 11, **caractérisé en ce que** le plan d'étalonnage a une ondulation inférieure à 5 µm, de préférence inférieure à 1 µm.

15. Procédé selon l'une des revendications précédentes,
**caractérisé en ce que**
les limites (X_{g}, Y_{g}) sont déterminées dans la direction horizontale pour l'enlèvement dans une couche suivante (Sᵢ₊₁) selon la profondeur de matrice (z) à partir de la définition de forme de la matrice.

16. Procédé selon la revendication 15, **caractérisé en ce que** l'épaisseur (Δz) d'une couche enlevée (Sᵢ) est déterminée à partir des profondeurs mesurées de matrice et les limites (X_{g}, Y_{g}) sont déterminées dans la direction horizontale pour l'enlèvement dans une couche suivante (Sᵢ₊₁) également selon l'épaisseur de couche déterminée (Δz) à partir de la définition de forme de la matrice.

17. Procédé selon la revendication 15 ou 16, **caractérisé en ce que** la détermination des limites d'enlèvement (X_{g}, Y_{g}) d'une couche (Sᵢ, Sᵢ₊₁) s'effectue par rapport aux données mémorisées relatives à la forme de la matrice (10).

18. Dispositif de fabrication d'une matrice (10) formée de manière définie dans une pièce à usiner (11) avec
un dispositif d'usinage par laser (12-18) qui enlève par couches successives la matière de la pièce à usiner (11) selon la forme définie et avec un dispositif de mesure qui mesure en continu la profondeur de matrice (z),
**caractérisé par**
un dispositif de mémorisation (91) qui mémorise les valeurs mesurées en continu conjointement avec les coordonnées respectives ou au niveau des emplacements de mémoire suivant les coordonnées respectives, et
par un dispositif de contrôle (63, 92, 93) qui contrôle ultérieurement le dispositif d'usinage par laser (12-18) suivant les valeurs mesurées.

19. Dispositif selon la revendication 18, **caractérisé en ce que** le dispositif de contrôle utilise une valeur mesurée mémorisée lorsqu'à l'intérieur de la même couche le laser se trouve à proximité de l'emplacement correspondant à la valeur mesurée et/ou lorsque dans une couche plus profonde le laser se trouve à proximité ou au niveau de l'emplacement correspondant à la valeur mesurée.

20. Dispositif selon la revendication 18 ou 19, **caractérisé en ce que** le dispositif de contrôle utilise une valeur mesurée pour le réglage immédiat ou ultérieur de paramètres d'interactions du rayon laser.

21. Dispositif selon l'une des revendications 18 à 20, **caractérisé par** un dispositif de contrôle (81) qui détermine les limites (X_{g}, Y_{g}) dans la direction horizontale pour l'enlèvement dans une couche suivante (S_{i + 1}) selon la profondeur de matrice (z) à partir de la définition de forme.

22. Dispositif selon la revendication 21, **caractérisé en ce que** le dispositif de contrôle comporte un dispositif de détermination (82) pour déterminer l'épaisseur (Δz) d'une couche enlevée (Sᵢ) à partir des profondeurs mesurées de matrice, et sachant que le dispositif de contrôle (81) détermine les limites (X_{g}, Y_{g}) dans la direction horizontale pour l'enlèvement dans une couche suivante (S_{i + 1}) également selon l'épaisseur déterminée de couche (Δz) à partir de la définition de forme.

23. Dispositif selon la revendication 21 ou 22, **caractérisé par** une mémoire (83) pour mémoriser la définition de forme de la matrice (10).

24. Dispositif selon l'une des revendications 18 à 23, le dispositif d'usinage par laser (12-18) guidant la lumière laser à l'aide d'un système de guidage du rayon laser à l'intérieur d'une zone d'usinage déterminée au préalable par le dispositif sur la surface de la pièce à usiner, avec un capteur de profondeur (70, 71) qui se sert d'une lumière provenant de l'emplacement d'usinage pour mesurer la profondeur et génère une valeur mesurée,
**caractérisé par**
un dispositif d'étalonnage (72-74) qui est conçu pour mesurer une surface d'étalonnage de préférence plane et qui comporte une mémoire (73) pour mémoriser les valeurs de correction selon les différences entre valeurs mesurées et valeurs connues, conjointement avec les coordonnées respectives ou aux emplacements de mémoire selon les coordonnées respectives,
et par un dispositif de correction (74, 75) qui corrige la valeur mesurée selon la position de l'emplacement par rapport aux valeurs de correction stockées dans la mémoire (74).

25. Dispositif selon la revendication 24, **caractérisé en ce que** la correction s'effectue de manière additive et/ou multiplicative.

26. Dispositif selon la revendication 24 ou 25, **caractérisé en ce qu'**une correction s'effectue suivant la profondeur de matrice.
